# EUROPEAN PATENT APPLICATION

(11) **EP 4 668 180 A1**
(43) Date of publication of application: **24.12.2025**
(21) Application number: 24764228.3
(22) Date of filing: 04.03.2024
(51) Int. Cl.: G06Q 10/04, G09F 3/20, G06Q 30/06, G06Q 10/08, G06Q 50/10, G06K 7/14, G06K 19/06

(54) **RECOMMENDED ROUTE PROVISION METHOD AND SYSTEM BASED ON LOCATION INFORMATION OF ELECTRONIC SHELF LABEL**

(30) Priority: 02.03.2023 KR 20230027869; 02.03.2023 KR 20230027871
(71) Applicant: SOLUM CO., LTD., Gyeonggi-do 16914 (KR)
(72) Inventor: LEE, Hyun Suk, Suwon-si, Gyeonggi-do 16543 (KR); KIM, Ji Eun, Seongnam-si, Gyeonggi-do 13618 (KR); KIM, Eo Jin, Suwon-si, Gyeonggi-do 16426 (KR)
(74) Representative: BCKIP Part mbB
(86) International application number: PCT/KR2024/002747
(87) International publication number: WO 2024/181829

(57) **Abstract**

One embodiment provides a recommended route provision method carried out by an application executed by at least one processor of a computing device, the recommended route provision method comprising the steps of: receiving a user input for selecting a product; acquiring data related to the location of a user terminal; acquiring data related to the location of an electronic shelf label to which the selected product is assigned; and, on the basis of the data related to the location of the user terminal and the data related to the location of the electronic shelf label, providing a recommended route associated with the location of the electronic shelf label to which the selected product is assigned.

## Description

### BACKGROUND OF THE INVENTION

### Technical Field

The present invention relates to a recommended route provision method and system based on location information of an electronic shelf label.

### Related Art

The use of electronic labels is gradually spreading in in the field of applications such as displaying product information of products displayed in a store. Electronic labels, called electronic shelf labels or electronic tags, are connected to a central management server via a gateway to receive product information to be displayed, and display the received product information on an electronic paper display. The use of the electronic labels is expanding because the electronic labels operate with low-power consumption for extended battery life and allow display information to be changed via a communications network, thereby reducing store management labor costs.

When a new product is displayed on a shelf, an assignment procedure is required to enable an electronic label to display information on the product. Typically, when a store manager reads a barcode attached to an electronic label and a product barcode using a terminal to transmit the barcode to a management server, the management server assigns the electronic label to the product, registers this in a database, and transmits product information on the product to the electronic label so that the display is changed.

Meanwhile, a large number of products may be displayed on shelves of a store. A customer in the store may use product location information signs installed near the shelves to ascertain an approximate location at which a desired product is displayed. For example, the customer in the store may move to the approximate location of the product ascertained through the location information signs, find a desired product at the position, and place the product in a shopping cart.

When a customer wishes to purchase a variety of products, the customer needs to navigate through a plurality of areas of the store and place the products in the shopping cart. In this case, the customer needs to shorten a shopping time by moving to several areas in which desired products are displayed along an appropriate path. Accordingly, in today's society where efficient use of time is important, there is a growing need for a method of providing a recommended path for shopping to customers.

Further, even when the customer moves to the approximate location of the product ascertained by the location information signs, there are limitations in immediately ascertaining an exact location of the product provided on the shelf. This is because various types of other products other than the product that the customer desires to purchase may be densely displayed on the same shelf.

### DETAILED DESCRIPTION OF INVENTION

### THCHNICAL PROBLEMS

Various embodiments of the present disclosure are intended to provide a recommended route provision method and system based on location information of an electronic shelf label.

Various embodiments of the present disclosure are intended to provide a method and system that provide a recommended route to a customer using location information of an electronic shelf label so that the customer can efficiently shop and control an operation of an LED of the electronic shelf label so that the customer can easily recognize and follow the recommended route.

### THCHNICAL SOLUTION

An aspect provides,
a recommended route provision method performed by an application executed by at least one processor of a computing device, the recommended route provision method including: receiving a user input for selecting a product; acquiring data regarding a location of a user terminal; acquiring data regarding a location of an electronic shelf label to which the selected product is assigned; and providing a recommended route related to the location of the electronic shelf label to which the selected product is assigned, based on the data regarding the location of the user terminal and the data regarding the location of the electronic shelf label.

In another aspect, the recommended route provision method may further include controlling an operation of an LED included in the electronic shelf label to which the selected product is assigned.

In another aspect, the providing the recommended route may include providing, as the recommended route, a shortest path having the location of the user terminal as a start point and the location of the electronic shelf label to which the selected product is assigned as a destination point.

In another aspect,
the receiving of the user input may include receiving a user input for selecting a plurality of products, the acquiring of the data regarding the location of the electronic shelf label may include acquiring data regarding locations of the plurality of electronic shelf labels to which the plurality of products are assigned, and the providing the recommended route may include providing the recommended route having any one of the locations of the plurality of electronic shelf labels as a destination point and the remaining locations as transit points.

In another aspect, the recommended route provision method may further include controlling an operation of LEDs included in the plurality of electronic shelf labels.

In another aspect, the controlling of the operation of the LEDs may include in the plurality of electronic shelf labels includes turning on the LED included in the electronic shelf label located at the shortest distance from the location of the user terminal among the plurality of electronic shelf labels.

In another aspect, the providing the recommended route may include generating the recommended route to pass through the plurality of product disposition areas in which at least one of the plurality of products is placed in ascending order of a distance from the location of the user terminal.

In another aspect, the providing the recommended route may include generating the recommended route to pass through the plurality of product disposition areas in which at least one of the plurality of products is placed, in descending order of the number of placed products.

In another aspect, the acquiring of the data regarding the location of the user terminal may include receiving, by the user terminal, a beacon signal from a beacon; receiving, by the computing device, a beacon signal from the user terminal; and acquiring, by the computing device, the data regarding the location of the user terminal based on the beacon signal.

An aspect provides,
a recommended route provision system including an electronic shelf label; and a computing device including at least one processor configured to execute an application for performing the recommended route provision method.

### EFFECT OF INVENTION

According to various aspect of the present disclosure, it is possible to provide a recommended route provision method and system based on location information of an electronic shelf label.

According to various aspect of the present disclosure, it is possible to provide a method and system that provide the recommended route to a customer using the location information of the electronic shelf label so that the customer can efficiently shop and control an operation of an LED of the electronic shelf label so that the customer can easily recognize and follow the recommended route.

According to various aspect of the present disclosure, it is possible for the customer to intuitively and easily recognize the location of the product on the recommended route by turning on the LED of the electronic shelf label to which the product located at a shortest distance from a location of the customer among a plurality of products that the customer desires to purchase is assigned, based on location information of the electronic shelf labels.

### BRIEF DESCRIPTION OF THE DRAWING

FIG. 1 illustrates an illustrative configuration of a recommended route provision system based on location information of an electronic shelf label according to an embodiment.
FIG. 2 illustrates an illustrative configuration of the electronic shelf label according to an embodiment.
FIG. 3 is a block diagram illustrating an illustrative configuration of a server according to an embodiment.
FIG. 4 is a block diagram illustrating an illustrative configuration of a computing device according to an embodiment.
FIG. 5 is a flowchart illustrating a recommended route provision method based on location information of an electronic shelf label according to an embodiment.
FIG. 6 illustrates a case in which a product list generated by user input is displayed on the computing device according to an embodiment.
FIG. 7 illustrates a case in which a first recommended route is displayed on the computing device according to an embodiment.
FIG. 8 illustrates a case in which a second recommended route is displayed on the computing device according to another embodiment.
FIG. 9 is a flowchart illustrating a recommended route provision method based on location information of an electronic shelf label according to another embodiment.
FIG. 10 illustrates a case in which operations of LEDs of a plurality of electronic shelf labels located on a recommended route are controlled according to an embodiment.
FIG. 11 illustrates a case in which operations of LEDs of a plurality of electronic shelf labels located on a recommended route are controlled according to another embodiment.
FIG. 12 illustrates a case in which operations of LEDs of a plurality of electronic shelf labels located on a recommended route are controlled according to yet another embodiment.
FIG. 13 illustrates an illustrative configuration of a product location information display system using LEDs of electronic shelf labels according to an embodiment.
FIG. 14 is a block diagram illustrating an illustrative configuration of a server according to an embodiment.
FIG. 15 is a block diagram illustrating an illustrative configuration of the computing device according to an embodiment.
FIG. 16 is a flowchart illustrating a product location information displaying method using LEDs of electronic shelf labels according to an embodiment.
FIG. 17 is a flowchart illustrating a step of receiving user input according to an embodiment.
FIG. 18 illustrates a case in which a plurality of product selection tabs are displayed on a display module of the computing device according to an embodiment.
FIG. 19 illustrates a case in which an LED of an electronic shelf label corresponding to a product selected by a user is turned on according to an embodiment.
FIG. 20 is a flowchart illustrating a product location information displaying method using an LED of an electronic shelf label according to another example.
FIG. 21 illustrates a case in which a product disposition area selection tab is displayed on the display module of the computing device according to an embodiment.
FIG. 22 illustrates a case in which a product disposition area selection tab is displayed on a display module of another computing device according to an embodiment.
FIG. 23 illustrates a case in which a shelf selection tab is displayed on the display module of the computing device according to an embodiment.
FIG. 24 illustrates a case in which LEDs of a plurality of electronic shelf labels provided in a product disposition area selected by a user are turned on according to an embodiment.
FIG. 25 illustrates an LED of a first electronic shelf label turned on based on a first signal and an LED of a second electronic shelf label turned on based on a second signal according to an embodiment.
FIG. 26 is a flowchart illustrating a product location information displaying method using LEDs of electronic shelf labels according to another embodiment.
FIG. 27 illustrates scanning a QR code related to product information using a camera module of the computing device according to an embodiment.
FIG. 28 illustrates a product category selection tab displayed on a display module of the computing device based on a QR code identification result according to an embodiment.

### BEST MODE FOR CARRYING OUT THE INVENTION

The present disclosure may be subjected to various transformations and may have various embodiments, and specific embodiments will be illustrated in the drawings and described in detail in the detailed description. The effects and characteristics of the present disclosure and methods for achieving these will become clear from embodiments that will be described in detail later together with the drawings. However, the present disclosure is not limited to the embodiments disclosed below, and can be implemented in various forms. In the following embodiments, terms such as first and second are used for the purpose of distinguishing one component from another component, rather than in a limiting sense. Further, singular expressions include plural expressions unless the context clearly indicates otherwise. In addition, terms such as include or have mean presence of characteristics or components described in the specification, and do not preclude a likelihood of one or more other characteristics or components being added. Further, in the drawings, sizes of the components may be exaggerated or reduced for the convenience of description. For example, since sizes and thicknesses of the respective components shown in the drawings are arbitrarily shown for the convenience of description, the present disclosure is not necessarily limited to what is shown.

Hereinafter, embodiments of the present disclosure will be described in detail with reference to the accompanying drawings, the same or corresponding components are denoted by the same drawing reference signs upon description with reference to the drawings, and redundant descriptions thereof will be omitted.

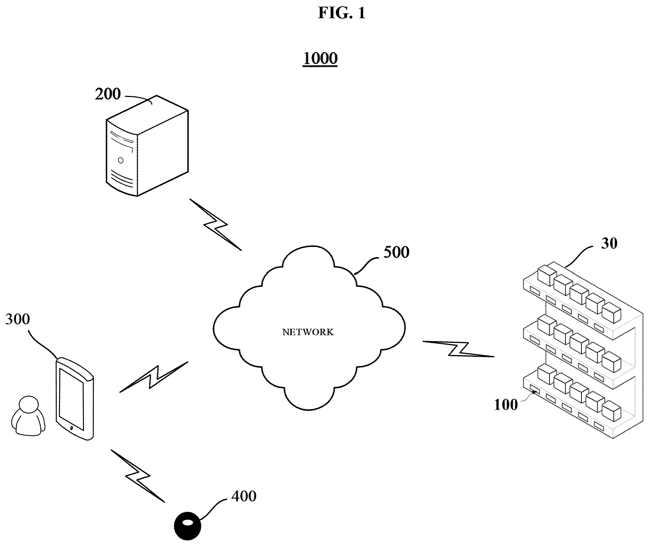

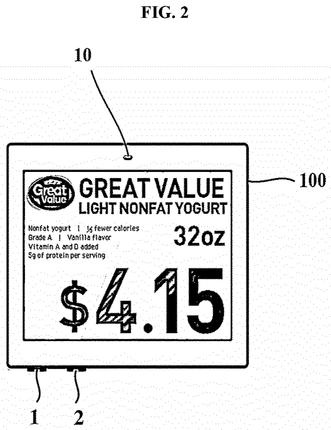

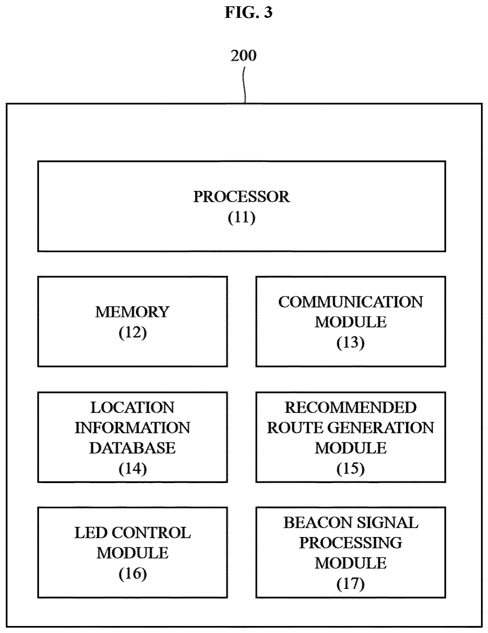

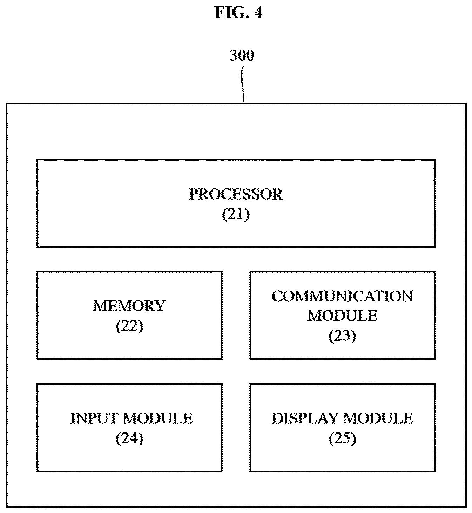

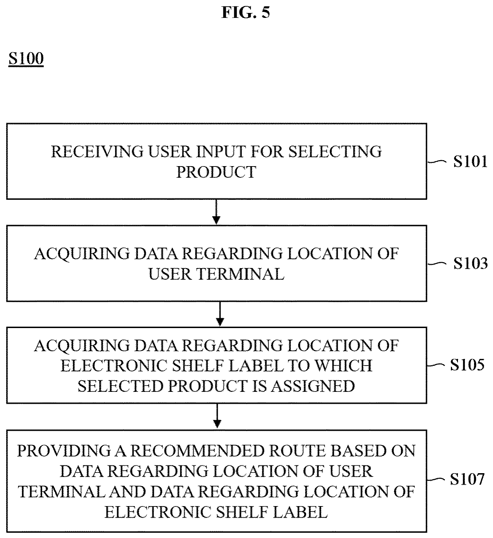

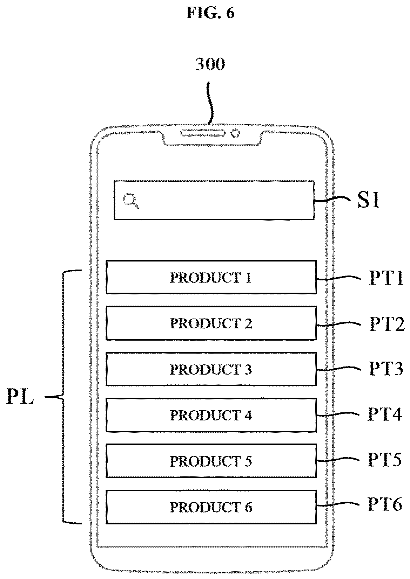

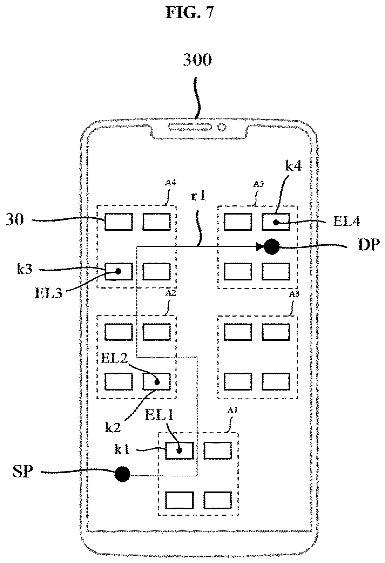

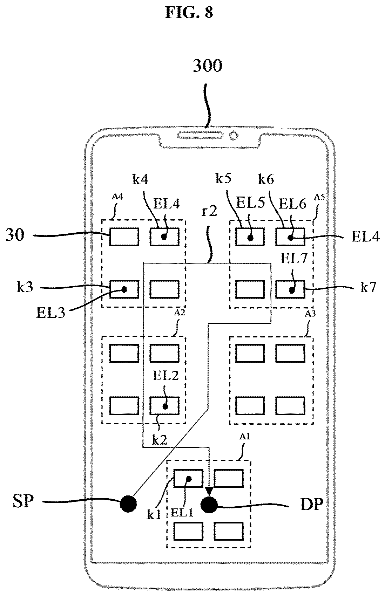

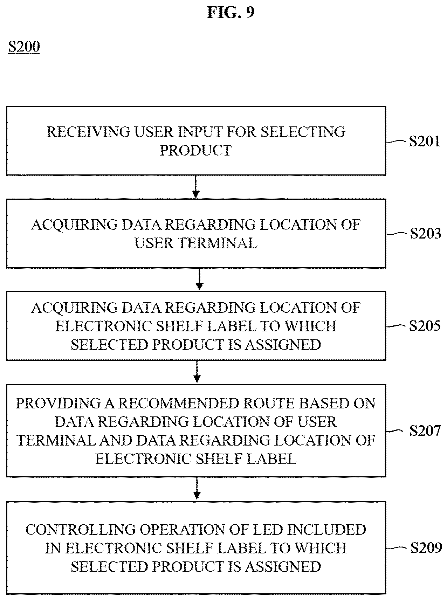

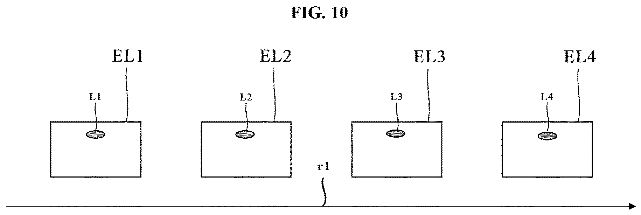

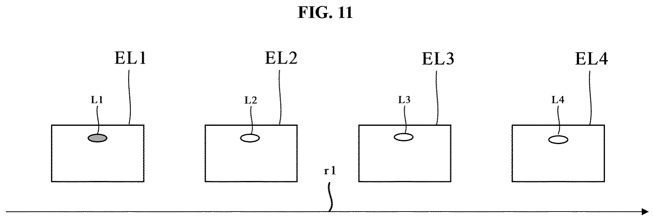

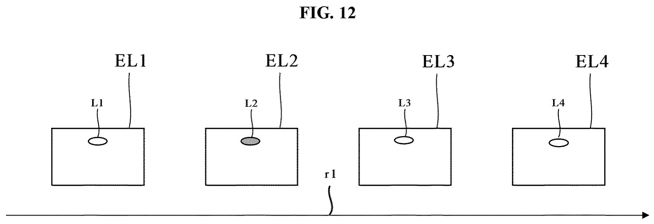

FIG. 1 illustrates an illustrative configuration of a recommended route provision system 1000 based on location information of an electronic shelf label according to an embodiment. FIG. 2 illustrates an illustrative configuration of an electronic shelf label 100 according to an embodiment. FIG. 3 is a block diagram illustrating an illustrative configuration of a server 200 according to an embodiment. FIG. 4 is a block diagram illustrating an illustrative configuration of a computing device 300 according to an embodiment. FIG. 5 is a flowchart illustrating a recommended route provision method S100 based on location information of the electronic shelf label 100 according to an embodiment. FIG. 6 illustrates a case in which a product list PL generated by a user input is displayed on the computing device 300 according to an embodiment. FIG. 7 illustrates a case in which a first recommended route r1 is displayed on the computing device 300 according to an embodiment. FIG. 8 illustrates a case in which a second recommended route r2 is displayed on the computing device 300 according to another embodiment. FIG. 9 is a flowchart illustrating a recommended route provision method S200 based on location information of the electronic shelf label 100 according to another embodiment. FIG. 10 illustrates a case in which operations of LEDs L1, L2, L3, and L4 of a plurality of electronic shelf labels EL1, EL2, EL3, and EL4 located on a recommended route are controlled according to an embodiment. FIG. 11 illustrates a case in which operations of LEDs L1, L2, L3, L4 of a plurality of EL1, EL2, EL3, and EL4 located on a recommended route are controlled according to another embodiment. FIG. 12 also illustrates a case in which operations of LEDs L1, L2, L3, and L4 of a plurality of EL1, EL2, EL3, and EL4 located on a recommended route are controlled according to yet another embodiment.

Referring to FIG. 1, a recommended route provision system 1000 based on location information of the electronic shelf label 100 according to an embodiment may include the electronic shelf label 100, a server 200, and the computing device 300. The computing device 300 may be a portable user terminal.

Further, the system 1000 may include a plurality of beacons 400 disposed at regular intervals inside a store where products are displayed. Each of the plurality of beacons 400 may transmit a beacon signal in real time in all directions. The computing device 300 may receive the beacon signals from the plurality of beacons 400. As will be described below, location location information of the computing device 300 of a user terminal type may be acquired based on the beacon signals from the plurality of beacons 400.

The system 1000 may control an operation of the LED 10 of the electronic shelf label 100 based on the user input of the customer, thereby displaying location information of a product selected by a customer in a store, so that the customer may intuitively ascertain a location of at least one product located along a recommended route.

The electronic shelf label 100, the server 200, and the computing device 300 may be connected to each other through a network 500. Here, the network 500 according to the embodiment may be a connection structure that enables information exchange between nodes such as the electronic shelf label 100, the server 200, and the computing device 300. For example, the network 500 may include, but is not limited to, a 3rd generation partnership project (3GPP) network, a long term evolution (LTE) network, a world interoperability for microwave access (WIMAX) network, the Internet, a local area network (LAN), a wireless local area network (WLAN), a wide area network (WAN), a personal area network (PAN), a Bluetooth network, a satellite broadcasting network, an analog broadcasting network, a digital multimedia broadcasting (DMB) network, and the like.

The electronic shelf label 100 may be wirelessly connected to the server 200 through a separate gateway (not shown). However, the present invention is not limited thereto, and the electronic shelf label 100 may be connected to the computing device 300 through wireless communication. For example, the electronic shelf label 100 may be paired with the computing device 300 based on a Bluetooth function.

Hereinafter, the electronic shelf label 100, the server 200, and the computing device 300 included in the system 1000 will be described in detail with reference to the accompanying drawings.

### - Electronic Shelf Label 100

The electronic shelf label 100 may be an electronic device mounted on a shelf 30 to display information related to products displayed on the shelf 30. For example, the electronic shelf label 100 may display product-related information such as a Korean product name, an English product name, a country of origin, product price, raw materials, and weight/calories.

The electronic shelf label 100 may include a display module that displays a template to which product-related information has been applied on the front, and a communication module capable of communicating with the server 200 and the computing device 300. Furthermore, all components and programs capable of Bluetooth communication may be installed in the electronic shelf label 100.

The display module included in the electronic shelf label 100 may include an electronic paper display (EPD) that maintains product information display state even when power is not supplied. The electronic paper display is suitable for the electronic shelf label 100 requiring reduced power consumption because its bistability allows a display state to be maintained for a long period of time even when power supply is interrupted. a twist ball type using hemispherical twist balls charged with electrostatic charge, an electrophoretic display using an electrophoresis method and microcapsules, and a cholesterol liquid crystal display using cholesterol liquid crystals are known as the electronic paper display.

However, the present invention is not limited thereto, and the display module included in the electronic shelf label 100 may include any one of a liquid crystal display (LCD), a thin film transistor-liquid crystal display (TFT LCD), an organic light-emitting diode (OLED), a flexible display, and a 3D display.

Referring to FIG. 2, the electronic shelf label 100 may include a display module that displays information related to products provided on one area of an outer surface, and the LED 10 provided on another area. Here, the "LED 10" stands for "light emitting device" and may be a light emitting device included in the electronic shelf label 100.

Furthermore, the electronic shelf label 100 may include at least one button 1 or 2. For example, the electronic shelf label 100 may include a first button 1 and a second button 2. The first button 1 and the second button 2 may be provided in one area of the outer surface of the electronic shelf label 100.

The LED 10 may be controlled based on a signal from the server 200 or the computing device 300. Further, a type of emission color of the LED 10 may vary. For example, the emission color of the LED 10 may include various colors such as blue, red, green, yellow, sky blue, gray, and white.

A pairing signal may be transmitted from the electronic shelf label 100 to the computing device 300 according to a user input via the first button 1 and/or the second button 2. Accordingly, the electronic shelf label 100 may be paired with the computing device 300 based on a Bluetooth scheme. For example, when the user presses the first button 1 and/or the second button 2, the pairing signal is transmitted from the electronic shelf label 100 to the computing device 300, and the electronic shelf label 100 may be paired with the computing device 300 based on a Bluetooth function.

### - Server 200

The server 200 may perform a series of processes for providing an environment necessary for the system 1000 to perform a method of providing the recommended route to a customer so that the customer can shop efficiently by using the location information of the electronic shelf label 100, and controlling an operation of the LED 10 of the electronic shelf label 100 to enable the customer to easily recognize and follow the recommended route.

Specifically, in an embodiment, the server 200 may exchange necessary data with the electronic shelf label 100 and the computing device 300 so that the recommended route provision method based on the location information of the electronic shelf label 100 can be performed. Accordingly, the server 200 may provide a necessary environment for performing the recommended route provision method.

For example, the server 200 may provide an environment in which the recommended route provision application may operate on the computing device 300 (for example, a portable user terminal-type computing device, a desktop-type computing device, and/or a fixed kiosk-type computing device). The server 200 may include an application program, data, and/or instructions for an operation of the recommended route provision application and may transmit data based thereon to the computing device 300.

Further, the server 200 may provide a license key to the computing device 300. The server 200 may provide the license key for granting the computing device 300 an authority to receive data regarding recommended route. For example, a customer using a store may receive a recommended route providing service by using the computing device 300 that has received the license key.

Referring to FIG. 3, the server 200 may be implemented as a predetermined computing device including at least one processor 11 for data processing, a memory 12 that stores, for example, application programs, data and/or instructions, at least one communication module 13 for data exchange with an external device, a location information database 14 that stores location information of the electronic shelf label 100, a recommended route generation module 15 that generates the recommended route, an LED control module 16 that controls an operation of the LED 10 of the electronic shelf label 100, and a beacon signal processing module 17 that processes a beacon signal from a beacon 400 to acquire location information of the computing device 300.

The processor 11 may control an overall operation of components included in the server 200 to provide an environment in which the recommended route provision application can operate to the computing device 300.

The processor 11 may be a system-on-chip (SOC) including, for example, a central processing unit (CPU) and/or a graphics processing unit (GPU), and may execute, for example, an operating system (OS) and/or the application programs stored in the memory 12.

In addition, the processor 11 may internally communicate with each component included in the server 200 via a system bus, and may include one or more predetermined bus structures, including a local bus.

Further, the processor 11 may be implemented using at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 12 may store one or more of an operating system (OS), various application programs, data, and instructions to provide an environment necessary for performing a product location information display method.

Further, the memory 12 may include a program area and a data area. Here, the program area according to the embodiment may be associated between an operating system (OS) that boots the server 200 and functional elements, and the data area may store data generated when the server 200 is used.

In an embodiment, the memory 12 may be any storage device, such as a ROM, a RAM, an EPROM, a flash drive, or a hard drive and may also be a web storage that performs a storage function on the Internet. Furthermore, the memory 12 may be a removable storage medium on the server.

The communication module 13 may include various types of communication devices that enable the server 200 to transmit and receive data to and from an external device. The server 200 may transmit data based on, for example, application programs, data, and/or instructions for an operation of the recommended route provision application to the computing device 300 via the communication module 13.

The location information database 14 may store the location information of the electronic shelf label 100. A plurality of electronic shelf labels 100 may be provided on the shelf 30 to correspond to a plurality of products. These plurality of electronic shelf labels 100 may be disposed at respective specific locations on the shelf 30, and specific location information of the plurality of electronic shelf labels 100 with respect to the shelves 30 may be stored in the location information database 14.

For example, the first electronic shelf label among the plurality of electronic shelf labels 100 may be provided on a second floor, third row of a first shelf provided in area A among a plurality of areas. In this case, "second floor, third row of the first shelf in area A" that is the location information of the first electronic shelf label may be stored as the location information of the first electronic shelf label in the location information database 14, to correspond to a unique identification number of the first electronic shelf label.

The recommended route generation module 15 may generate the recommended route based on data regarding the location of the computing device 300 and data regarding the location of the electronic shelf label 100.

For example, the recommended route may have the location of the computing device 300 of a user terminal type as a start point and the location of the electronic shelf label 100 to which the product selected by the user is assigned as a destination point.

However, the present invention is not limited thereto, and the recommended route may be a recommended route having the location of the electronic shelf label provided at the shortest distance from the location of the computing device 300 as a start point and the location of the electronic shelf label 100 to which the product selected by the user is assigned as a destination point.

Further, the recommended route may be the recommended route having the location of the shelf closest to the location of the computing device 300 as a start point and a location of the shelf on which the electronic shelf label 100 to which the product selected by the user is assigned is provided, as a destination point.

The LED control module 16 may control an operation of the LED 10 of the electronic shelf label 100 based on a signal from the computing device 300. For example, the recommended route may be generated based on a user input for selecting a first product for the computing device 300, and simultaneously, the first electronic shelf label may be controlled so that the first LED of the first electronic shelf label to which the first product is assigned is turned on.

Also, the recommended route may be generated based on a user input for selecting the plurality of products by the LED control module 16, and simultaneously, the plurality of electronic shelf labels may be controlled so that the LEDs of the plurality of electronic shelf labels to which the plurality of products are assigned are turned on.

The beacon signal processing module 17 may process the beacon signals from the plurality of beacons 400 to acquire the location information of the computing device 300. For example, the plurality of beacons 400 may be placed at regular intervals inside the store. The plurality of beacons 400 may transmit beacon signals in all directions. The computing device 300 of a user terminal type used by a user may receive the beacon signals from the plurality of beacons 400. The computing device 300 may transmit the received beacon signals to the server 200. The processor 11 of the server 200 may transfer the received beacon signals to the beacon signal processing module 17 through the communication module 13. The beacon signal processing module 17 may analyze a strength and direction of the beacon signals to acquire location information of the computing device 300 that has transmitted the beacon signal.

Although a case in which the server 200 according to an embodiment performs the functions and operations as described above has been described, an external device (for example, the computing device 300) may perform at least some of the functions and operations performed by the server 200, and the server 200 may further perform at least some of the functions and operations performed by the external device in some embodiments.

### - Computing Device 300

The computing device 300 may be a device in which the recommended route provision application is installed. The computing device 300 may include a portable user terminal.

The computing device 300 of a user terminal type may include a display module, through which information related to the location of the product is displayed, and a user input for selecting the product while the recommended route provision application is executed may be received through a touch screen integrated with the display module.

The computing device 300 may be implemented as, for example, a computer or a portable terminal that can access the server 200 via a network. Here, the computer may include, for example, a desktop computer, a laptop computer, or VR HMD (such as HTC VIVE, Oculus Rift, GearVR, DayDream, or PSVR) with a web browser. Here, the VR HMD may be any of a model for a PC (such as HTC VIVE, Oculus Rift, FOVE, or Deepon), a mobile model (such as GearVR, DayDream, Baofeng Mojing, or Google Cardboard), a model for a consoled (PSVR), and a stand-alone model (such as Deepon or PICO) implemented independently. The portable terminal is a wireless communication device that ensures portability and mobility, and may include, for example, a smartphone, a tablet PC, a wearable device, and any device with a communication module for Bluetooth (BLE; Bluetooth Low Energy), NFC, RFID, ultrasonic, infrared IR, WiFi, LiFi, or the like.

Referring to FIG. 4, the computing device 300 may include a processor 21, a memory 22, a communication module 23, an input module 24, and a display module 25. Various components included in the computing device 300 may be designed to be accommodated in a housing of the computing device 300.

In an embodiment, the processor 21 may control an overall operation of the components included in the computing device 300 through the recommended route provision application in the memory 22 to provide an environment for providing the recommended route based on the user input.

For example, the processor 21 may control an operation of the communication module 23 and the input module 24 so that a signal according to the user input received through the input module 24 can be transmitted to the server 200 through the communication module 23.

The processor 21 may include a central processing unit (CPU) and/or a graphics processing unit (GPU). Further, the processor 21 may include at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 22 may store instructions and data that can be used to create a recommended route provision environment. The recommended route provision application may be stored in the memory 22. The recommended route provision application may provide various types of user interfaces for providing the recommended route provision environment.

The memory 22 may include at least one non-transitory computer-readable storage medium and a transitory computer-readable storage medium. For example, the memory 22 may be any storage device such as a ROM, EPROM, flash drive, or hard drive. In addition, the memory 22 may include a web storage that performs a data storage function on the Internet.

The communication module 23 may include various types of communication devices that enable data transmission and reception to and from an external device. For example, the communication module 23 may transmit and receive data to and from the electronic shelf label 100 and/or the server 200 via a wireless network.

The communication module 23 may wirelessly transmit and receive data to and from at least one of a base station, an external terminal, and an arbitrary server on a mobile communication network established through a communication device capable of performing technical standards or communication schemes (for example, long term evolution (LTE), long term evolution-advanced (LTE-A), 5G NR (New Radio), or Wi-Fi) for mobile communication, short-range communication schemes, or the like.

Furthermore, the communication module 23 may be configured to transmit and receive data to and from an external electronic device via Bluetooth. For example, the communication module 23 may receive the pairing signal from the electronic shelf label 100 and be paired with the electronic shelf label 100 via Bluetooth.

The input module 24 may be configured to receive various types of user input of users of the computing device 300. For example, the input module 24 may include a touch screen that receives a user's touch input. When the input module 24 is implemented as a touch screen, the input module 24 may be formed integrally with the display module 25. However, the present invention is not limited thereto, and the input module 24 may further include a keyboard capable of receiving user input in the form of characters.

The display module 25 may display the recommended route provision application stored in the memory 22. For example, the display module 25 may include a display device that displays various types of user interface (UI) images for providing the recommended route provision environment.

The display module 25 may include any one of a liquid crystal display (LCD), a thin film transistor-liquid crystal display (TFT LCD), an organic light emitting diode (OLED), a flexible display, and a 3D display.

### - Recommended Route Provision Method S100

Hereinafter, the recommended route provision method through the recommended route provision application executed by at least one processor 21 of the computing device 300 according to various embodiments will be described in detail with reference to FIGS. 5 to 12.

In various embodiments, at least one processor 21 of the computing device 300 may execute the recommended route provision application stored in at least one memory 22 or cause the recommended route provision application to operate in a background state.

Hereinafter, the at least one processor 21 of the computing device 300 operates to execute instructions of the recommended route provision application to perform a method of providing the environment necessary for performing the recommended route provision method described above, but for convenience of description, a case in which the recommended route provision application rather than the at least one processor 21 of computing device 300 performs the recommended route provision method will be briefly described.

FIG. 5 is a flowchart illustrating a recommended route providing method S100 based on location information of the electronic shelf label 100 according to an embodiment.

Referring to FIG. 5, the recommended route provision method S100 may include step S101 of receiving user input for selecting a product, step S103 of acquiring data regarding a location of the user terminal, step S105 of acquiring data regarding a location of the electronic shelf label to which the selected product is assigned, and step S107 of providing the recommended route based on the data regarding the location of the user terminal and the data regarding the location of the electronic shelf label.

In the step of receiving the user input S101, a user input for selecting a product may be received from the user through the input module 24 of the computing device 300 of a user terminal type. Here, the input module 24 may be implemented in the form of a graphical user interface displayed on the display module 25.

For example, referring to FIG. 6, in step S101, a search window S1 for searching for a desired product may be displayed on the display module 25 of the computing device 300. A product list PL of a plurality of product tabs PT1, PT2, PT3, PT4, PT5, and PT6 corresponding to the plurality of products searched for based on user input through the search window S1 may be displayed on the display module 25.

When the user clicks on any one of the plurality of product tabs PT1, PT2, PT3, PT4, PT5, and PT6 included in the product list PL, a detailed information window including detailed information of the product associated with the tab may be displayed on the display module 25. For example, when the user clicks on a first product tab PT1 associated with product 1, a detailed information window including detailed information of product 1 may be displayed on the display module 25.

The detailed information window may include a delete button for removing the product tab from the product list PL. For example, when the user clicks on the delete button included in the detailed information window associated with product 1, the first product tab PT1 of product 1 may be removed from the product list PL.

However, the present invention is not limited thereto, and the computing device 300 may receive user input for selecting a product by recognizing a voice input for selecting the product from the user or receiving a touch input on a product disposition map showing products displayed in a store.

For example, the computing device 300 may display a product disposition map showing a plurality of placed products, and a user input for selecting a product may be received through the computing device 300 by the user selecting a desired product from among the plurality of products displayed on the product disposition map. For example, the product disposition map may display icons of a plurality of pieces of product information. The computing device 300 may receive a user input for selecting a product by the user clicking the icon of the desired product from among the plurality of product icons.

Meanwhile, as the user input for selecting the product is received, the computing device 300 may display location information of the electronic shelf label to which the selected product is assigned on the display module 25. For example, the location information of the electronic shelf label to which the selected product is assigned may be displayed on the display module 25 as text or as an icon on the product disposition map.

In step S103 of acquiring the data regarding the location of the user terminal, the data regarding the location of the computing device 300 of a user terminal type may be acquired. As a user possessing the computing device 300 moves within the store, the location of the computing device 300 may change in real time. The location of the computing device 300 ascertained in real time in step S103 may be utilized to designate the start point of the recommended route.

For example, the plurality of beacons 400 may be placed at regular intervals inside the store. The plurality of beacons 400 may transmit beacon signals in all directions. The computing device 300 of a user terminal type used by the user may receive beacon signals from the plurality of beacons 400. The computing device 300 may transmit the received beacon signal to the server 200, and the beacon signal processing module 17 of the server 200 may analyze a strength and direction of the beacon signal to acquire location information of the computing device 300 that has transmitted the beacon signal. The server 200 may transmit the data regarding the location of the computing device 300 calculated based on the beacon signal, to the computing device 300.

In step S105 of acquiring the data regarding the location of the electronic shelf label 100, the data regarding the location of the electronic shelf label 100 to which the product corresponding to the user input received in step S101 is assigned may be acquired.

For example, in step S101, the computing device 300 may transmit user input for selecting product 1, product 2, product 3, product 4, product 5, and product 6 to the server 200. The processor 11 of the server 200 may acquire location information of the plurality of electronic shelf labels to which product 1, product 2, product 3, product 4, product 5, and product 6 are respectively assigned, based on the user input for selecting product 1, product 2, product 3, product 4, product 5, and product 6 from the location information database 14. The server 200 may transmit data regarding location information of the plurality of electronic shelf labels to which product 1, product 2, product 3, product 4, product 5, and product 6 are respectively assigned to the computing device 300.

In step S107 of providing the recommended route, a recommended route related to the location of the electronic shelf label may be provided based on the data regarding the location of the computing device 300 acquired in step S103 and the data regarding the location information of the electronic shelf label acquired in the step 105.

Here, the recommended route related to the location of the electronic shelf label may be a recommended route having the location of the computing device 300 as a start point and the location of the electronic shelf label 100 to which the selected product is assigned as a destination point.

For example, referring to FIG. 7, the recommended route generation module 15 of the server 200 may generate a first recommended route r1 having the location of the computing device 300 as a start point SP and the location of the electronic shelf label as a destination point DP. In this case, the first recommended route r1 may be a shortest path between the start point SP and the destination point DP.

Here, the location of the computing device 300, which may serve as the start point SP of the recommended route r1, may be a real-time location at a point in time when the location of the computing device 300 is measured, but the present invention is not limited thereto, and may also be a location at a point in time before the point in time when the location of the computing device 300 is measured.

However, the present invention is not limited thereto, and the recommended route related to the location of the electronic shelf label may be a recommended route having the location of the electronic shelf label 100 located at the shortest distance from the location of the computing device 300 as a start point and the location of the electronic shelf label 100 to which the product selected by the user is assigned as a destination point.

Further, the recommended route related to the location of the electronic shelf label may be a recommended route having a location of the shelf at the shortest distance from the location of the computing device 300 as a start point and a location of the shelf on which the electronic shelf label 100 to which the product selected by the user is assigned is provided as a destination point.

Further, in step S101, a user input for selecting a plurality of products including product 1, product 2, product 3, and product 4 is received, and in step S105, data regarding the locations of the plurality of electronic shelf labels to which product 1, product 2, product 3, and product 4 are assigned may be acquired. In this case, in step S107, a recommended route having any one of the locations of the plurality of electronic shelf labels to which product 1, product 2, product 3, and product 4 are assigned as a destination point DP, and the remaining locations as transit points may be provided.

For example, in step S107, a recommended route having a location of the fourth electronic shelf label EL4 to which product 4 that is the farthest from the location of the computing device 300 among products 1, product 2, product 3, and product 4 is assigned as a destination point, and the locations of the plurality of electronic shelf labels EL1, EL2, and EL3 to which products 1, product 2, and product 3 are assigned as transit points may be provided.

The recommended route generation module 15 may acquire in-store location information of the plurality of electronic shelf labels EL1, EL2, EL3, and EL4 from the location information database 14. A plurality of shelves 30 may be displayed in each of first to fifth product disposition areas A1 to A5 within the store. As illustrated in FIG. 7, the plurality of displayed shelves 30 may be displayed on the display module 25 of the computing device 300.

For example, the first electronic shelf label EL1 to which product 1 is assigned may be located on a first shelf k1 included in the first product disposition area A1. The second electronic shelf label EL2 to which product 2 is assigned may be located on a second shelf k2 included in the second product disposition area A2. A third electronic shelf label EL3 to which product 3 is assigned may be located on a third shelf k3 included in the fourth product disposition area A4. A fourth electronic shelf label EL4 to which product 4 is assigned may be located on a fourth shelf k4 included in the fifth product disposition area A5.

The location of the fourth electronic shelf label EL4 within the fifth product disposition area A5 furthest from the start point SP among the first, second, fourth, and fifth product disposition areas A1, A2, A4, and A5 may be set as the destination point DP.

Further, the location of the first electronic shelf label EL1 in the first product disposition area A1, the location of the second electronic shelf label EL2 in the second product disposition area A2, and the location of the third electronic shelf label EL3 in the fourth product disposition area A4 in ascending order of a distance from the start point SP among the remaining first, second, and fourth product disposition areas A1, A2, and A4 may be set as a plurality of transit points.

According to the first recommended route r1, a user of the computing device 300 may sequentially pass through locations of the first electronic shelf label EL1, the second electronic shelf label EL2, the third electronic shelf label EL3, and the fourth electronic shelf label EL4.

However, the present invention is not limited thereto, and in step S107, the second recommended route r2 may be generated to pass through the plurality of product disposition areas A1, A2, A4, and A5 in which at least one of the plurality of products is placed, in descending order of the number of placed products.

For example, in step S101, a user input for selecting the plurality of products including product 1, product 2, product 3, product 4, product 5, product 6, and product 7 may be received, and in step S105, data regarding the locations of the plurality of electronic shelf labels to which product 1, product 2, product 3, product 4, product 5, product 6, and product 7 is assigned may be acquired.

For example, referring to FIG. 8, the first electronic shelf label EL1 to which product 1 is assigned may be located on the first shelf k1 included in the first product disposition area A1. The second electronic shelf label EL2 to which product 2 is assigned may be located on the second shelf k2 included in the second product disposition area A2.

The third electronic shelf label EL3 to which product 3 is assigned may be located on the third shelf k3 included in the fourth product disposition area A4, and the fourth electronic shelf label EL4 to which product 4 is assigned may be located on the fourth shelf k4 included in the fourth product disposition area A4.

A fifth electronic shelf label EL5 to which product 5 is assigned may be located on a fifth shelf k5 included in the fifth product disposition area A5, a sixth electronic shelf label EL6 to which product 6 is assigned may be located on a sixth shelf k6 included in the fifth product disposition area A5, and a seventh electronic shelf label EL7 to which product 7 is assigned may be located on a seventh shelf k7 included in the fifth product disposition area A5.

The fifth product disposition area A5 in which the largest number of products are placed among the first, second, fourth, and fifth product disposition areas A1, A2, A4, and A5 may be set as a first transit point. Specifically, a location of any one of the fifth to seventh electronic shelf labels EL5 to EL7 in the fifth product disposition area A5 in which the largest number of products are placed, may be set as the first transit point.

Further, the fourth product disposition area A4 in descending order of the number of placed products among the remaining first, second, and fourth product disposition areas A1, A2, and A4 may be set as a second transit point, and the second product disposition area A2 may be set as a third transit point. Specifically, a location of any one of the third and fourth electronic shelf labels EL3 and EL4 in the fourth product disposition area A4 may be set as the second transit point. Further, the location of the second electronic shelf label EL2 in the second product disposition area A5 may be set as the third transit point.

The number of products placed in the first product disposition area A1 is the same as the number of products placed in the second product disposition area A2, but the second product disposition area A2 is closer to the fourth product disposition area A4, which is the second transit point, than the first product disposition area A1, and thus, the second product disposition area A2 is set as the third transit point in preference to the first placement area A1. Accordingly, the first product disposition area A1 may be set as the destination point DP.

According to the second recommended route r2, the user of the computing device 300 may sequentially pass through the locations of the fifth to seventh electronic shelf labels EL5 to EL7 within the fifth product disposition area A5, the third electronic shelf label EL3 and the fourth electronic shelf label EL4 in the fourth product disposition area A4, the second electronic shelf label EL2 in the second product disposition area A2, and the first electronic shelf label EL1 in the first product disposition area A1.

Meanwhile, when the number of products placed in the third product disposition area A3 is the same as the number of products placed in the fifth product disposition area A5, the third product disposition area A3 relatively closer to the start point SP may be set as the first transit point in preference to the fifth product disposition area A5.

FIG. 9 is a flowchart illustrating a recommended route provision method S200 based on location information of the electronic shelf label 100 according to another embodiment.

Referring to FIG. 5, the recommended route provision method S200 may include step S201 of receiving a user input for selecting a product, step S203 of acquiring the data regarding the location of the user terminal, step S205 of acquiring data regarding the location of the electronic shelf label to which the selected product is assigned, step S207 of providing the recommended route based on the data regarding the location of the user terminal and the data regarding the location of the electronic shelf label, and step S209 of controlling the operation of the LED included in the electronic shelf label to which the selected product is assigned.

Steps S201, S203, S205, and S207 may be substantially the same as steps S101, S103, S105, and S107 in FIG. 5, respectively. Therefore, description of steps S201, S203, S205, and S207 will be omitted.

In step S209 of controlling the operation of the LED included in the electronic shelf label, an operation of the LED included in the electronic shelf label to which the selected product is assigned may be controlled. For example, referring to FIG. 10, in step S209, the plurality of LEDs L1, L2, L3, L4, and L5 included in the first to fifth electronic shelf labels EL1, EL2, EL3, and EL4, and EL5 disposed along the first recommended route r1 may be simultaneously turned on. Accordingly, the user of the computing device 300 may intuitively and easily ascertain the location of the selected product while moving along the first recommended route r1. Step S209 may also be performed between step 205 and step S207.

Meanwhile, in step S209, the LED included in the electronic shelf label located at the shortest distance from the location of the computing device 300 among the first to fourth electronic shelf labels EL1, EL2, EL3, and EL4 disposed along the first recommended route r1 may be turned on.

For example, referring to FIG. 11, when the user of the computing device 300 is located at the start point (SP in FIG. 7), a first LED L1 of the first electronic shelf label EL1 located at the shortest distance from the start point SP, which is the location of the computing device 300, may be turned on. In this case, the second to fourth LEDs L2 to L4 of the remaining second to fourth electronic shelf labels EL2 to EL4 disposed on the first recommended route r1 may not be turned on.

Also, referring to FIG. 12, when the user of the computing device 300 moves along a first recommended route r1 and is located near the area in which the second electronic shelf label EL2 is disposed, the second LED L2 of the second electronic shelf label EL2 located at the shortest distance from the location of the computing device 300 may be turned on. In this case, the first, third, and fourth LEDs L1, L3, and L4 of the remaining first, third, and fourth electronic shelf labels EL1, EL3, and EL4 disposed on the first recommended route r1 may not be turned on.

Thus, when the location of the computing device 300 changes in real time as the user of the computing device 300 moves along the recommended route, only the LED included in the electronic shelf label located at the shortest distance from the location of the computing device 300 may be turned on in real time. Thus, selectively turning on the LEDs of the electronic shelf labels can reduce power consumption compared to turning on the LEDs of all the electronic shelf labels on the recommended route regardless of the location of the computing device 300.

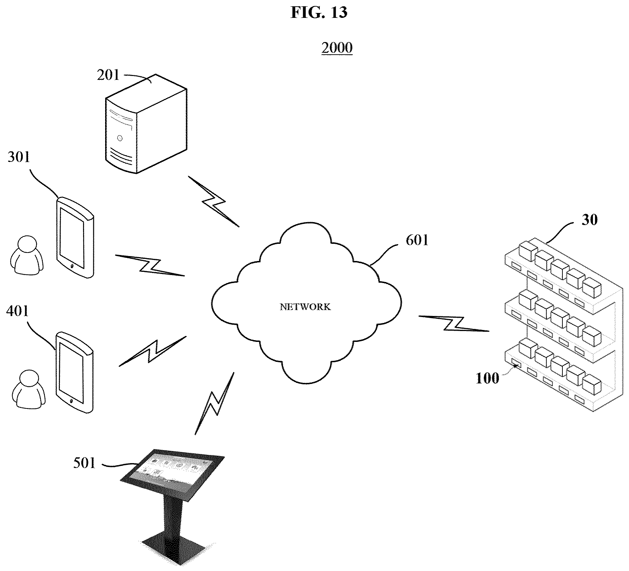

Meanwhile, referring to FIG. 13, a product location information display system 2000 using the LED 10 of the electronic shelf label 100 may be provided according to another embodiment. Referring to FIGS. 2 and 13, the system 2000 may include the electronic shelf label 100, a server 201, and computing device 301, 401, or 501. Here, the LED 10 stands for "light emitting device" and may be a light emitting device included in the electronic shelf label 100. The computing device 301, 401, or 501 may include portable user terminals 301 and 401, and a fixed kiosk 501 that may be fixed to one area of the store.

The system 2000 may control the lighting of the LED 10 of the electronic shelf label 100 based on the user input of the customer in the store, thereby displaying location information of the product selected by the customer, so that the customer can intuitively ascertain the location of the product that the customer desires to purchase.

The electronic shelf label 100, the server 201, and the computing devices 301, 401, and 501 may be connected to each other via a network 601. Here, the network 601 according to the embodiment may refer to a connection structure that enables information exchange between nodes, such as the electronic shelf label 100, the server 201, and the computing device 301, 401, or 501.

The electronic shelf label 100 may be wirelessly connected to the server 201 via a separate gateway (not shown). However, the present invention is not limited thereto and the electronic shelf label 100 may be connected to the computing device 301, 401, or 501 via wireless communication. For example, the electronic shelf label 100 may be paired with the computing device 301, 401, or 501 based on a Bluetooth function.

Hereinafter, the electronic shelf label 100, the server 201, and the computing device 301, 401, or 501 included in the system 2000 will be described in detail with reference to the accompanying drawings.

### - Electronic Shelf Label 100

The electronic shelf label 100 may be an electronic device mounted on the shelf 30 to display information related to products displayed on the shelf 30. For example, the electronic shelf label 100 may display product-related information such as a Korean product name, an English product name, a country of origin, product price, raw materials, and weight/calories.

The electronic shelf label 100 may include a display module that displays a template to which the product-related information has been applied on the front, and a communication module capable of communicating with the server 201 and the computing device 301. Furthermore, all components and programs capable of Bluetooth communication may be installed in the electronic shelf label 100.

Further, referring to FIG. 2, the electronic shelf label 100 may include at least one button 1 or 2. For example, the electronic shelf label 100 may include a first button 1 and a second button 2. The first button 1 and the second button 2 may be provided on one area of an outer surface of the electronic shelf label 100.

A pairing signal may be transmitted from the electronic shelf label 100 to the computing device 301, 401, or 501 according to a user input via the first button 1 and/or the second button 2. Accordingly, the electronic shelf label 100 may be paired with the computing device 301, 401, or 501 based on a Bluetooth scheme. For example, when the user presses the first button 1 and/or the second button 2, a pairing signal is transmitted from the electronic shelf label 100 to the computing device 301, 401, or 501, and the electronic shelf label 100 may be paired with the computing device 301, 401, or 501 based on a Bluetooth function.

### - Server 201

The server 201 may perform a series of processes for providing an environment necessary for performing a location information displaying method for a product selected by a customer in a store by controlling the lighting of the LED 10 of the electronic shelf label 100 based on the user input of the customer, so that the customer can intuitively ascertain the location of the product that the customer desires to purchase.

Specifically, in an embodiment, the server 201 may exchange necessary data with the electronic shelf label 100 and the computing device 301, 401, or 501 so that the product location information displaying method using the LED of the electronic shelf label 100 is performed. Accordingly, the server 201 may provide an environment necessary for performing the product location information displaying method.

For example, the server 201 may provide an environment in which a product location information display application may operate on the computing device 301, 401, or 501 (for example, a portable user terminal type computing device, a desktop type computing device, and/or a fixed kiosk type computing device). The server 201 may include, for example, an application program, data, and/or instructions for an operation of the product location information display application, and may transmit data based thereon to the computing device 301, 401, or 501.

Further, the server 201 may provide a license key to the computing device 301, 401, or 501. The server 201 may provide a license key for granting the computing device 301, 401, or 501 a right to receive product location information. For example, the customer in the store may receive a product location information display service by using the computing device 301, 401, or 501 that has received the license key.

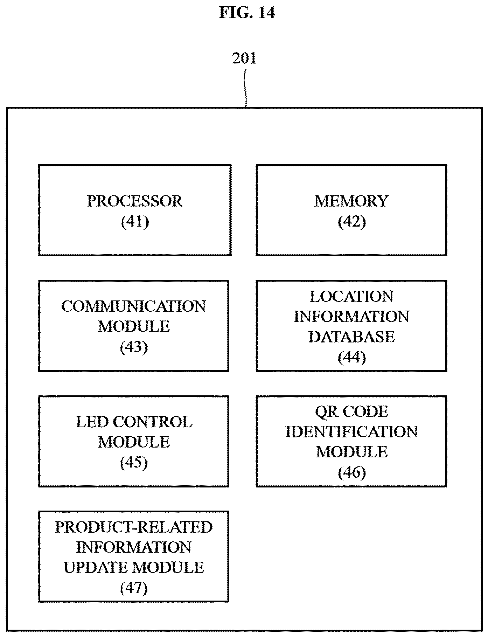

Referring to FIG. 14, the server 201 includes at least one processor 41 for data processing, a memory 42 for storing an application program, data, instructions, and/or the like, at least one communication module 43 for data exchange with an external device, a location information database 44 that stores the location information of the electronic shelf label 100, an LED control module 45 that controls an operation of the LED 10 of the electronic shelf label 100, a QR code identification module 46 that identifies a QR code related to the information on the product, and a product-related information update module 47 that updates product-related information displayed on the electronic shelf label 100.

The processor 41 may control an overall operation of components included in the server 201 to provide an environment in which the product location information display application can operate to the computing device 301, 401, or 501.

The processor 41 may be a system-on-chip (SOC) including, for example, a central processing unit (CPU) and/or a graphics processing unit (GPU), and may execute, for example, an operating system (OS) and/or the application programs stored in the memory 42.

In addition, the processor 41 may internally communicate with each component included in the server 201 via a system bus, and may include one or more predetermined bus structures, including a local bus.

Further, the processor 41 may be implemented using at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 42 may store one or more of an operating system (OS), various application programs, data, and instructions to provide an environment necessary for performing a product location information display method.

Further, the memory 42 may include a program area and a data area. Here, the program area according to the embodiment may be associated between an operating system (OS) that boots the server 201 and functional elements, and the data area may store data generated when the server 200 is used.

In an embodiment, the memory 42 may be any storage device, such as a ROM, a RAM, an EPROM, a flash drive, or a hard drive and may also be a web storage that performs a storage function on the Internet. Furthermore, the memory 42 may be a removable storage medium on the server.

The communication module 43 may include various types of communication devices that enable the server 201 to transmit and receive data to and from an external device. The server 201 may transmit data based on, for example, application programs, data, and/or instructions for an operation of the product location information display application to the computing device 301, 401, or 501 via the communication module 43.

The location information database 44 may store location information of the electronic shelf label 100. A plurality of electronic shelf labels 100 may be provided on the shelf 30 to correspond to a plurality of products. These the plurality of electronic shelf labels 100 may each be placed at specific locations on the shelf 30, and specific location information for the shelves 30 of the plurality of electronic shelf labels 100 may be stored in the location information database 44.

The LED control module 45 may control the lighting of the LED 10 of the electronic shelf label 100 based on a signal from the computing device 301, 401, or 501. For example, a first signal according to the first user input for selecting the first product for the computing device 301, 401, or 501 may be received via the communication module 43 and transferred to the LED control module 45. The LED control module 45 may control an operation of the first LED of the first electronic shelf label to which the first product is assigned so that the first LED of the first electronic shelf label is turned on.

The QR code identification module 46 may identify a QR code scanned by a camera module. Here, the QR code may be related to product information. For example, the QR code may include a link to the product location information display application. When the QR code is identified by the QR code identification module 46, a signal for executing the product location information display application may be transmitted to the computing device 301, 401, or 501 by the communication module 43.

The product-related information update module 47 may update the product-related information displayed on the electronic shelf label 100. For example, the product-related information update module 47 may control the electronic shelf label 100 so that product-related information displayed on the electronic shelf label 100 is periodically updated according to a product-related information update rule stored in the memory 42. The product-related information update rule stored in the memory 42 is determined by the user in advance and may be constantly modified.

However, the present invention is not limited thereto, and the product-related information update module 47 may also control the electronic shelf label 100 so that product-related information displayed on the electronic shelf label 100 is updated according to the user's editing input.

Although a case in which the server 201 according to the embodiment performs the functions and operations described above has been described above, at least some of the functions and operations performed by the server 201 may be performed by an external device (for example, the computing device 301, 401, or 501) in some embodiments, or at least some of the functions and operations performed by the external device may be further performed by the server 201.

### - Computing Devices 301, 401, and 501

The computing device 301, 401, or 501 may be devices on which the product location information display application is installed. The computing device 301, 401, or 501 may include portable user terminals 301 and 401, and a fixed kiosk 501 that may be fixed to one area of the store.

The user terminals 301 and 401 may be divided into a first user terminal 301 and a second user terminal 401 that are used by different users. The first user terminal 301 and the second user terminal 401 may have substantially the same structure. The kiosk 501 may be a standing-type computing device fixed to one area of the store. The user terminals 301 and 401 and the kiosk 501 may include a display module, through which product location-related information is displayed, and during the execution of the product location information display application, user input for selecting a product may be received through a touch screen integrated with the display module.

The computing device 301, 401, or 501 may be implemented as, for example, a computer or portable terminal that can access the server 201 via the network 600. Here, the computer may include, for example, a desktop computer, a laptop computer, or VR HMD (such as HTC VIVE, Oculus Rift, GearVR, DayDream, or PSVR) with a web browser. Here, the VR HMD may be any of a model for a PC (such as HTC VIVE, Oculus Rift, FOVE, or Deepon), a mobile model (such as GearVR, DayDream, Baofeng Mojing, or Google Cardboard), a model for a consoled (PSVR), and a stand-alone model (such as Deepon or PICO) implemented independently. The portable terminal is a wireless communication device that ensures portability and mobility, and may include, for example, a smartphone, a tablet PC, a wearable device, and any device with a communication module for Bluetooth (BLE; Bluetooth Low Energy), NFC, RFID, ultrasonic, infrared IR, WiFi, LiFi, or the like.

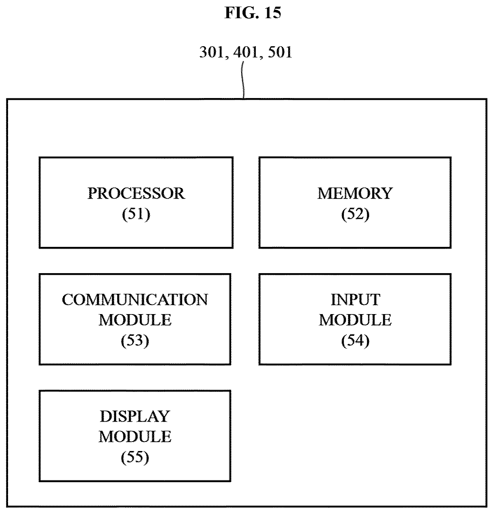

Referring to FIG. 15, the computing device 301, 401, or 501 may include a processor 51, memory 52, communication module 53, an input module 54, and a display module 55. Various components included in the computing device 301, 401, or 501 may be designed to be included in a housing of the computing device 301, 401, or 501.

In an embodiment, the processor 51 may control an overall operation of the components included in the computing device 301, 401, or 501 through the product location information display application in the memory 52 to provide an environment for displaying the product location information based on user input.

For example, the processor 51 may control operations of the communication module 53 and the input module 54 so that a signal according to the user input received through the input module 54 can be transmitted to the electronic shelf label 100 through the communication module 53.

The processor 51 may include a central processing unit (CPU) and/or a graphics processing unit (GPU). Further, the processor 51 may include at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 52 may store instructions and data that may be used to create a product location information display environment. The product location information display application may be stored in the memory 52. The product location information display application may provide various types of user interfaces for providing the product location information display environment.

The memory 52 may include at least one non-transitory computer-readable storage medium and a transitory computer-readable storage medium. For example, the memory 52 may be any storage device such as a ROM, EPROM, flash drive, or hard drive. In addition, the memory 52 may include a web storage that performs a data storage function on the Internet.

The communication module 53 may include various types of communication devices that enable data transmission and reception to and from an external device. For example, the communication module 53 may transmit and receive data to and from the electronic shelf label 100 and/or the server 201 via a wireless network.

The communication module 53 may wirelessly transmit and receive data to and from at least one of a base station, an external terminal, and an arbitrary server on a mobile communication network established through a communication device capable of performing technical standards or communication schemes (for example, Long Term Evolution (LTE), Long Term Evolution-Advanced (LTE-A), 5G NR (New Radio), or Wi-Fi) for mobile communication, short-range communication schemes, or the like.

Furthermore, the communication module 53 may be configured to transmit and receive data to and from an external electronic device via Bluetooth. For example, the communication module 53 may receive the pairing signal from the electronic shelf label 100 and be paired with the electronic shelf label 100 via Bluetooth.

The input module 54 may be configured to receive various types of user input of users of the computing device 301, 401, or 501. For example, the input module 54 may include a touch screen that receives a user's touch input. When the input module 54 is implemented as a touch screen, the input module 54 may be formed integrally with the display module 55. However, the present invention is not limited thereto, and the input module 54 may further include a keyboard capable of receiving user input in the form of characters.

The display module 55 may display the product location information display application stored in the memory 52. For example, the display module 55 may include a display device that displays various types of user interface (UI) images for providing a product-related information editing environment..

The display module 55 may include any one of a liquid crystal display (LCD), a thin film transistor-liquid crystal display (TFT LCD), an organic light emitting diode (OLED), a flexible display, and a 3D display.

### - Product Location Information Display Method S300, S400, or S500

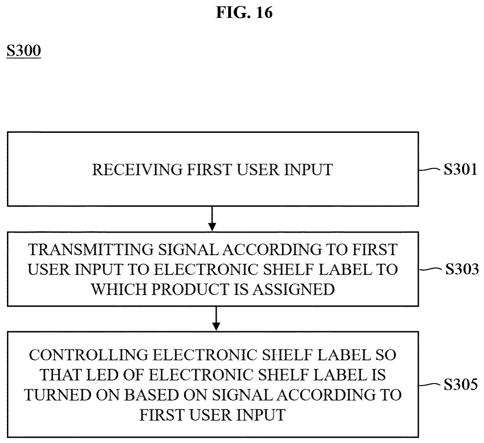

Hereinafter, a product location information displaying method through the product location information display application executed by at least one processor 51 of the computing device 301, 401, or 501 according to various embodiments will be described in detail with reference to FIGS. 16 to 28.

In various embodiments, at least one processor 51 of the computing device 301, 401, or 501 may execute the product location information display application stored in at least one memory 22 or cause the product location information display application to operate in a background state.

Hereinafter, a method of providing an environment necessary to perform the product location information display method described above by at least one processor 51 of the computing device 301, 401, or 501 operating to execute instructions of the product location information display application will be described and, for convenience of description, it is assumed that the product location information display application rather than the at least one processor 51 of the computing device 301, 401, or 501 performs the method.

FIG. 16 is a flowchart illustrating a product location information displaying method S300 using the LED 10 of the electronic shelf label 100 according to an embodiment.

Referring to FIG. 16, the product location information displaying method S300 may include step S301 of receiving a first user input, step S303 of transmitting the signal according to the first user input to an electronic shelf label to which a product is assigned, and step S305 of controlling the electronic shelf label so that an LED of the electronic shelf label is turned on based on the signal according to the first user input.

In the step S301 of receiving the first user input, the first user input from the user may be received through the input module 54 of the computing device 301, 401, or 501. Here, the input module 54 may be implemented in the form of a graphical user interface displayed on the display module 55.

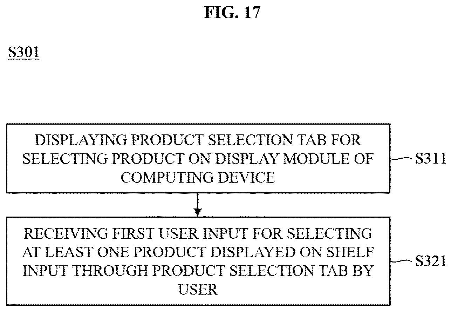

Here, the first user input may be a user input for selecting at least one product displayed on the shelf 30. For example, referring to FIG. 17, step S301 may include step 311 of displaying a product selection tab for selecting a product on the display module 55 of the computing device 301, 401, or 501, and step S321 of receiving the first user input for selecting at least one product displayed on the shelf 30 input through the product selection tab by the user.

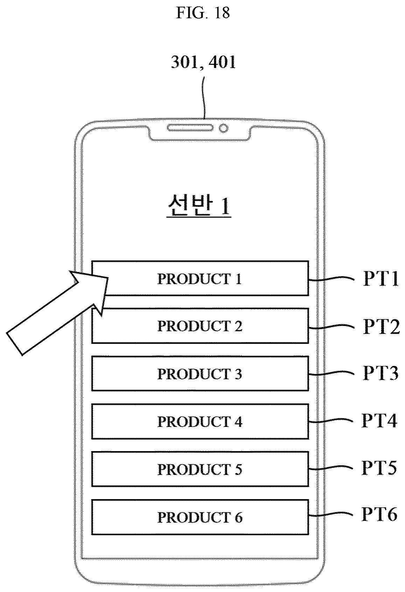

For example, referring to FIG. 18, a smartphone-type user terminal 301 or 401 may display the plurality of product selection tabs PT1, PT2, PT3, PT4, PT5, and PT6. The user may click on any one of among the plurality of product selection tabs PT1, PT2, PT3, PT4, PT5, and PT6. For example, a user may click on a first product selection tab PT1, and thus, the user terminal 301 or 401 may receive the first user input for selecting the first product.

However, the present invention is not limited thereto. The user terminal 301 or 401 may display a product disposition map showing a state in which the plurality of products are placed, and a first user input may be received through the user terminal 301 or 401 by the user selecting a desired product from among the plurality of products displayed on the product disposition map.

For example, the product disposition map may display icons of a plurality of pieces of product information. The user terminal 301 or 401 may receive the first user input for selecting a product selected by the user by the user clicking the icon of the desired product from among the plurality of product icons.

Meanwhile, as the first user input is received, the computing device 301, 401, or 501 may display the location information of the electronic shelf label to which the selected product is assigned on the display module 55. For example, the location information of the electronic shelf label to which the selected product is assigned may be displayed on the display module 55 as text or as the icon on the product disposition map.

In step S303 of transmitting the signal according to the first user input to the electronic shelf label to which the product is assigned, when the first user input is received, a signal for controlling at least one electronic shelf label to which at least one product is assigned displayed on the shelf 30 may be transmitted from the computing device 301, 401, or 501 to at least one electronic shelf label.

Here, the signal for controlling at least one electronic shelf label may be a signal for controlling an operation of the LED included in at least one electronic shelf label.

For example, the first signal according to the first user input for selecting the first product from among the plurality of products may be transmitted to the electronic shelf label to which the first product is assigned.

In step S305 of controlling the electronic shelf label, the electronic shelf label is controlled based on the signal according to the first user input, so that the LED of the electronic shelf label can be turned on.

For example, when the signal according to the first user input is transmitted to at least one electronic shelf label provided on the shelf 30, the at least one electronic shelf label may be controlled so that the LED of the at least one electronic shelf label blinks. In this case, the at least one electronic shelf label may be controlled so that the LED blinks in a specific pattern, wherein the specific pattern in which the LED blinks may be determined by the user in advance.

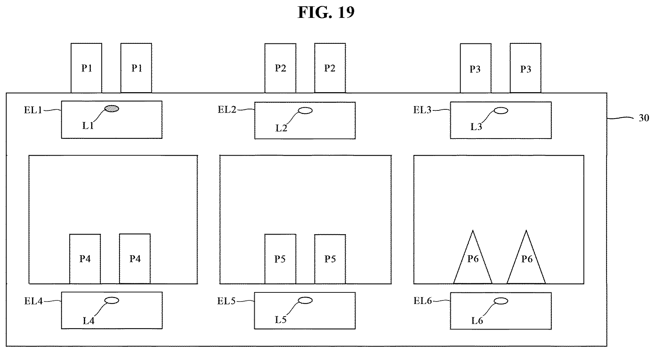

For example, referring to FIG. 19, a plurality of electronic shelf labels EL1, EL2, EL3, EL4, EL5, and EL6 and a plurality of products P1, P2, P3, P4, P5, and P6 assigned to the plurality of electronic shelf labels EL1, EL2, EL3, and EL4, and EL5, and EL6 may be provided on the shelf 30. In this case, the plurality of products P1, P2, P3, P4, P5, and P6 may be provided at locations corresponding to the plurality of electronic shelf labels EL1, EL2, EL3, and EL4, and EL5, and EL6. Further, the plurality of electronic shelf labels EL1, EL2, EL3, and EL4, and EL5, and EL6 may include a plurality of LEDs L1, L2, L3, L4, L5, and L6.

When the first user input for selecting the first product P1 from among the plurality of products P1, P2, P3, P4, P5, and P6 is received by the computing device 301, 401, or 501, the first signal for turning on the first LED L1 of the first electronic shelf label EL1 to which the first product P1 is assigned may be transmitted from the computing device 301, 401, or 501 to the first electronic shelf label EL1. Accordingly, the first LED L1 may be turned on, and the user of the computing device 301, 401, or 501 can intuitively and easily ascertain the location of the first product P1 by recognizing light from the first LED L1.

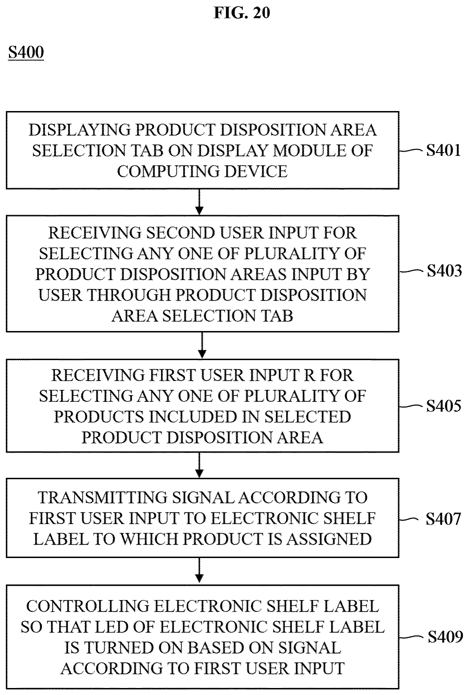

FIG. 20 is a flowchart illustrating a product location information display method S400 using the LED 10 of the electronic shelf label 100 according to another embodiment.

Referring to FIG. 20, the product location information display method S400 includes step S401 of displaying a product disposition area selection tab on the display module 55 of the computing device 301, 401, or 501, step S403 of receiving the second user input for selecting any one of the plurality of product disposition areas input by the user through the product disposition area selection tab, step S405 of receiving the first user input for selecting any one of the plurality of products included in the selected product disposition area, step S407 of transmitting the signal according to the first user input to the electronic shelf label to which the product is assigned, and step S409 of controlling the electronic shelf label so that the LED of the electronic shelf label is turned on based on the signal according to the first user input.

Steps S407 and S409 included in the method S400 in FIG. 20 are substantially the same as steps S303 and S305 included in the method S300 in FIG. 16, and therefore, description of steps S407 and S409 will be omitted.

In step S401 of displaying a product disposition area selection tab on the display module 55 of the computing device 301, 401, or 501, a product disposition area selection tab for selecting an area in which a product is placed may be displayed on the display module 55.

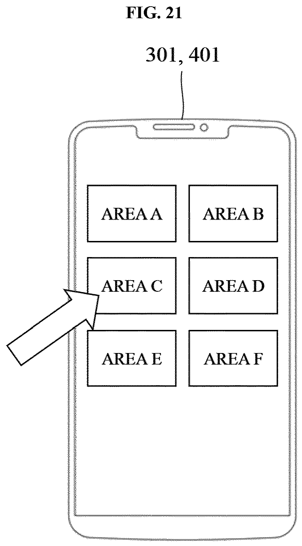

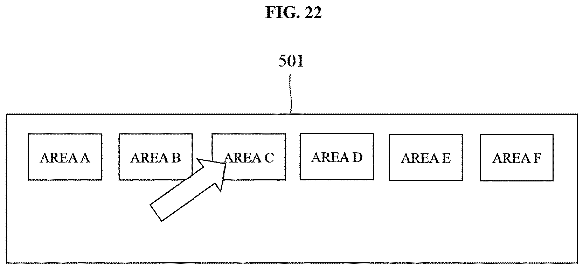

For example, referring to FIGS. 21 and 22, a plurality of product disposition area selection tabs corresponding to a plurality of product disposition areas including area A, area B, area C, area D, area E, and area F in which a plurality of products are placed may be displayed on the display module 55 of the computing device 301, 401, or 501.

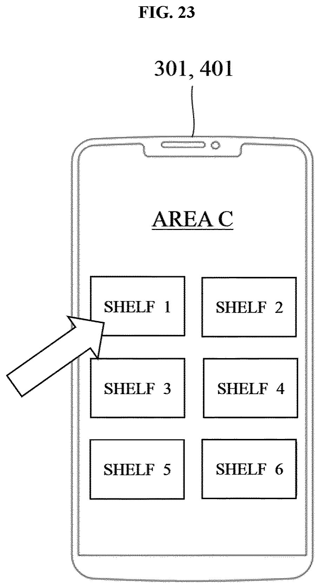

Also, referring to FIG. 23, when the user clicks on the product disposition area selection tab corresponding to any one area (for example, area C) among the plurality of product disposition area selection tabs, a plurality of shelf selection tabs corresponding to a plurality of shelves including shelf 1, shelf 2, shelf 3, shelf 4, shelf 5, and shelf 6 provided in any one area (for example, area C) among the plurality of areas in which the plurality of products are provided may be displayed on the display module 55 of the computing device 301, 401, or 501.

In step S403 of receiving a second user input, the second user input for selecting any one product disposition area among the plurality of product disposition areas may be received through the computing device 301, 401, or 501. For example, the second user input may be received through the computing device 301, 401, or 501 when the user clicks on any one of the plurality of product disposition area selection tabs.

For example, among the plurality of product disposition area selection tabs, the user may click the product disposition area selection tab corresponding to area C. Accordingly, the second user input for selecting area C may be received through the computing device 301, 401, or 501.

Further, a user input for selecting a shelf may be received through the computing device 301, 401, or 501 by the user clicking on any one of the plurality of shelf selection tabs. For example, the user may click on the shelf selection tab corresponding to shelf 1 among the plurality of shelf selection tabs. Accordingly, the user input for selecting shelf 1 may be received through the computing device 301, 401, or 501.

In the step S405 of receiving the first user input, the first user input from the user may be received through the input module 54 of the computing device 301, 401, or 501. Here, the input module 54 may be implemented in the form of a graphical user interface displayed on the display module 55.

For example, when the second user input for selecting area C is received via the computing device 301, 401, or 501, a user interface capable of receiving the first user input for selecting one of the plurality of products included in area C may be displayed on the display module 55. The user may input the first user input for selecting one of the plurality of products included in area C via the display module 55.

The method of receiving the first user input in step S405 is substantially the same as the method of receiving the first user input in step S301, and therefore, detailed description of step S405 will be omitted.

Meanwhile, the method S400 may further include, after step S403 of receiving the second user input, a step of transmitting a signal corresponding to the second user input to a plurality of electronic shelf labels provided in the selected product disposition area from among the plurality of product disposition areas.

Further, the method S400 may further include a step of controlling a plurality of electronic shelf labels provided in the selected product disposition area so that the LEDs of the plurality of electronic shelf labels provided in the selected product disposition area are turned on based on the signal according to the second user input.

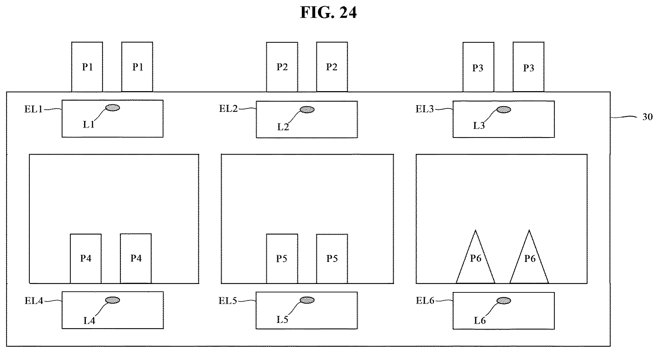

For example, referring to FIG. 24, a signal according to a second selection user input for selecting area C may be transmitted to the plurality of electronic shelf labels EL1, EL2, EL3, EL4, EL5, and EL6 provided on the shelf 30 disposed in area C, and accordingly, the plurality of electronic shelf labels EL1, EL2, EL3, and EL4, and EL5, and EL6 may be controlled so that the LEDs L1, L2, L3, L4, L5, and L6 of the plurality of electronic shelf labels EL1, EL2, EL3, and EL4, and EL5, and EL6 provided on the shelve 30 disposed in area C are turned on. Here, lighting colors of the LEDs L1, L2, L3, L4, L5, and L6 of the plurality of electronic shelf labels EL1, EL2, EL3, and EL4, and EL5, and EL6 according to the signal according to the second selection user input for selecting area C may all be the same.

Meanwhile, referring back to FIG. 16, in step S401 of receiving the first user input, the first computing device 301 may receive a (1-1)-th user input, and the second computing device 401, which is different from the first computing device 301, may receive a (1-2)-th user input. Here, the (1-1)-th user input and the (1-2)-th user input may be user inputs for selecting the same product.

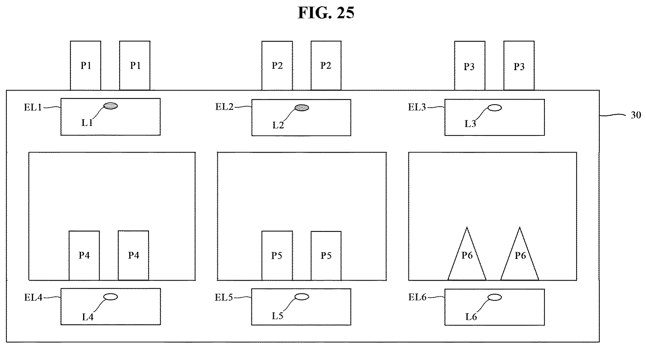

However, the present invention is not limited thereto, and the (1-1)-th user input and the (1-2)-th user input may be user inputs for selecting different products. For example, referring to FIG. 25, the first computing device 301 may receive the (1-1)-th user input for selecting the first product P1, and the second computing device 401 may receive the (1-2)-th user input for selecting the second product P2.

Further, in step S403 of transmitting the signal according to the first user input to the electronic shelf label, the first signal according to the (1-1)-th user input may be transmitted to at least one electronic shelf label, and the (1-2)-th signal according to the first user input may be transmitted to at least one electronic shelf label.

Here, when the first and second user inputs are user inputs for selecting the same product, the first and second signals may be transmitted to the same electronic shelf label.

However, the present invention is not limited thereto, and when the first and second user inputs are user inputs for selecting different products, the first and second signals may be transmitted to different electronic shelf labels. For example, the first signal according to the first user input for selecting the first product P1 may be transmitted to the first electronic shelf label EL1 to which the first product P1 is assigned, and the second signal according to the second user input for selecting the second product P2 may be transmitted to the second electronic shelf label EL2 to which the second product P2 is assigned.

Further, in step S405 of controlling the LED operation of the electronic shelf label, the electronic shelf label may be controlled so that the LED of the electronic shelf label lights in a first color based on the first signal, and the electronic shelf label may be controlled so that the LED of the electronic shelf label lights in a second color different from the first color based on the second signal.

Here, when the first user input and the second user input are user inputs for selecting the same product, the LED of the same electronic shelf label may light alternately in the first color and the second color.

However, the present invention is not limited thereto and when the first user input and the second user input are user inputs for selecting different products, the LEDs of two different electronic shelf labels may light in a first color and a second color, respectively.

For example, referring to FIG. 25, when the first signal according to the first user input for selecting the first product P1 is transmitted to the first electronic shelf label EL1 to which the first product P1 is assigned, the first LED L1 may light in the first color. Further, when the second signal according to the second user input for selecting the second product P2 is transmitted to the second electronic shelf label EL2 to which the second product P2 is assigned, the second LED L2 may light in the second color.

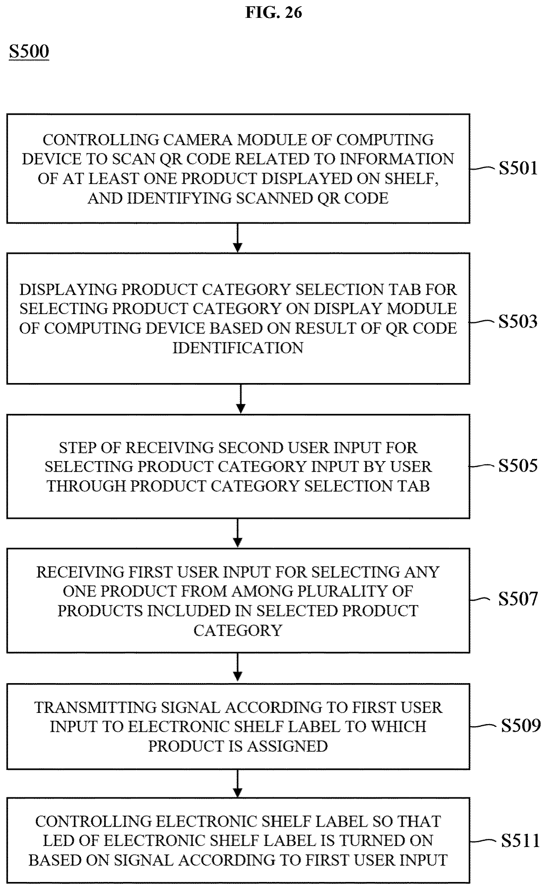

FIG. 26 is a flowchart illustrating a the product location information displaying method S500 using the LED 10 of the electronic shelf label 100 according to another embodiment.

Referring to FIG. 26, the product location information displaying method S500 may include step S501 of controlling a camera module of the computing device 301 or 401 so that the camera scans a QR code related to information of at least one product displayed on the shelf 30 and identifying the scanned QR code, step S503 of displaying a product category selection tab for selecting a product category on the display module 55 of the computing device 301 or 401 based on a result of the QR code identification, step S505 of receiving the second user input for selecting the product category input by the user through the product category selection tab, step S507 of receiving the first user input for selecting any product from among a plurality of products included in the selected product category, step S509 of transmitting the signal according to the first user input to the electronic shelf label to which the product is assigned, and step S511 of controlling the electronic shelf label so that the LED of the electronic shelf label is turned on based on the signal according to the first user input.

Steps S509 and S511 included in the method S500 in FIG. 26 are substantially the same as steps S303 and S305 included in the method S300 in FIG. 16, and therefore, description of steps S509 and S511 will be omitted.

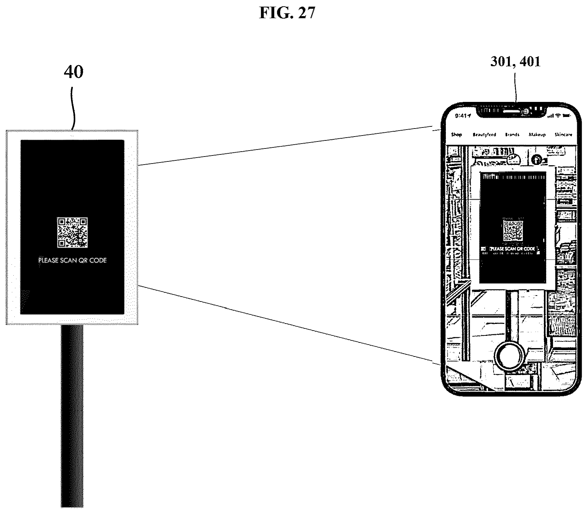

Referring to FIG. 27, in step S501 of identifying the scanned QR code, the QR code may be scanned using the computing device 301 or 401. Here, the computing devices 301 and 401 may be smartphone-type user terminals. The QR code may be related to product-related information data displayed on the shelf 30.

For example, the camera module included in the computing device 301 or 401 may be used to scan a QR code included in a QR code installation stand 40 installed near a product display area. The processor 51 of the computing device 301 or 401 may identify the scanned QR code based on a QR code identification algorithm.

However, the present invention is not limited thereto, and information data of the scanned QR code may be transmitted to the server 201, and the scanned QR code may be identified by the QR code identification module 46 of the server 201. In this case, the QR code identification information identified by the QR code identification module 46 may be transmitted back to the computing device 301 or 401.

In step S503 of displaying the product category selection tab on the display module 55 of the computing device 301 or 401, a product category selection tab for selecting a category of a desired product based on a QR code identification result may be displayed on the display module 55.

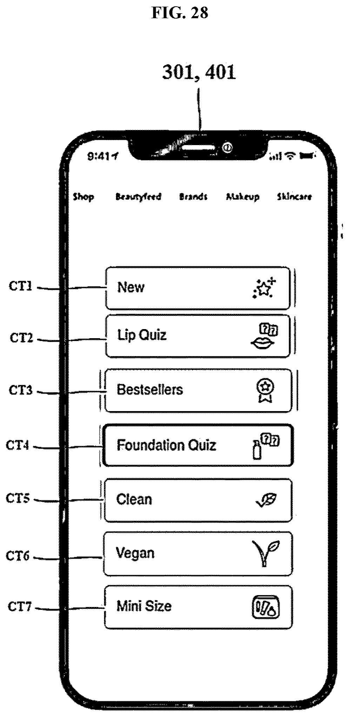

For example, referring to FIG. 28, a plurality of product category selection tabs CT1, CT2, CT3, CT4, CT5, CT6, and CT7 corresponding to different categories may be displayed on the display module 55 of the computing device 301 or 401.

In step S505 of receiving the second user input, any one of the plurality of product category selection tabs CT1, CT2, CT3, CT4, CT5, CT6, and CT7 may be selected. For example, referring to FIG. 28, the user may click on a fourth product category selection tab CT4 among the plurality of product category selection tabs CT1, CT2, CT3, CT4, CT5, CT6, and CT7.

In step S507 of receiving the first user input, any one of the plurality of product selection tabs corresponding to the plurality of products in the category selected in step S505 may be selected.

The embodiment of the present invention described above may be implemented in the form of program instructions that can be executed through various computer components and recorded on a computer-readable recording medium. The computer-readable recording medium may include program instructions, data files, data structures, and the like alone or in combination. The program instructions recorded on the computer-readable recording medium may be program instructions specially designed and configured for the present invention or program instructions known and available to those skilled in the art of computer software. Examples of the computer-readable recording medium include a magnetic medium such as a hard disk, a floppy disk, and a magnetic tape, an optical recording medium such as a CD-ROM and a DVD, a magneto-optical medium such as a floptical disk, and a hardware device specially configured to store and execute program instructions, such as a ROM, a RAM, and a flash memory. Examples of the program instruction include not only machine language codes such as codes generated by a compiler, but also high-level language codes that can be executed by a computer using an interpreter, or the like. The hardware device may be changed into one or more software modules to perform the processing according to the present disclosure, and vice versa.

The specific executions described herein are exemplary and do not limit the scope of the present invention in any way. For the sake of brevity of the specification, description of conventional electronic components, control systems, software, and other functional aspects of the systems may be omitted. Further, connections or connection members between the components illustrated in the drawings are merely examples of functional connections and/or physical or circuit connections, and may be indicated as various functional connections, physical connections, or circuit connections that are replaceable or additional ones in an actual device. Further, when there is no specific mention such as "essential" and "important," a corresponding component may not be required for the application of the present invention.

Further, although the detailed description of the present invention has been described with reference to the preferred embodiments of the present invention, it will be understood by those skilled in the art or those with common knowledge in the art that the present disclosure can be variously modified and changed without departing from the spirit and technical scope of the present disclosure described in the claims to be described later. Therefore, the technical scope of the present disclosure should not be limited to the content described in the detailed description of the specification, but should be determined by the claims.

### INDUSTRIAL APPLICABILITY

The present invention has industrial applicability in that it is possible to improve shopping efficiency for a customer by providing the recommended route to the customer based on the location information of the electronic shelf label and controlling the operation of the LED of the electronic shelf label to enable the user to easily ascertain the location of the product.

## Claims

1. A recommended route provision method performed by an application executed by at least one processor of a computing device, the recommended route provision method comprising:
receiving a user input for selecting a product;
acquiring data regarding a location of a user terminal;
acquiring data regarding a location of an electronic shelf label to which the selected product is assigned; and
providing a recommended route related to the location of the electronic shelf label to which the selected product is assigned, based on the data regarding the location of the user terminal and the data regarding the location of the electronic shelf label.

2. The recommended route provision method of claim 1, further comprising:
controlling an operation of an LED included in the electronic shelf label to which the selected product is assigned.

3. The recommended route provision method of claim 1, wherein the providing the recommended route includes providing, as the recommended route, a shortest path having the location of the user terminal as a start point and the location of the electronic shelf label to which the selected product is assigned as a destination point.

4. The recommended route provision method of claim 1,
wherein the receiving of the user input includes receiving a user input for selecting a plurality of products,
the acquiring of the data regarding the location of the electronic shelf label includes acquiring data regarding locations of a plurality of electronic shelf labels to which the plurality of products are assigned, and
the providing the recommended route includes providing the recommended route having any one of the locations of the plurality of electronic shelf labels as a destination point and the remaining locations as transit points.

5. The recommended route provision method of claim 4, further comprising:
controlling an operation of LEDs included in the plurality of electronic shelf labels.

6. The recommended route provision method of claim 5, wherein the controlling of the operation of the LEDs included in the plurality of electronic shelf labels includes turning on the LED included in the electronic shelf label located at the shortest distance from the location of the user terminal among the plurality of electronic shelf labels.

7. The recommended route provision method of claim 4, wherein the providing the recommended route includes generating the recommended route to pass through the plurality of product disposition areas in which at least one of the plurality of products is placed in ascending order of a distance from the location of the user terminal.

8. The recommended route provision method of claim 4, wherein the providing the recommended route includes generating the recommended route to pass through the plurality of product disposition areas in which at least one of the plurality of products is placed, in descending order of the number of placed products.

9. The recommended route provision method of claim 1, wherein the acquiring of the data regarding the location of the user terminal includes
receiving, by the user terminal, a beacon signal from a beacon;
receiving, by the computing device, a beacon signal from the user terminal; and
acquiring, by the computing device, the data regarding the location of the user terminal based on the beacon signal.

10. A recommended route provision system comprising:
an electronic shelf label; and
a computing device including at least one processor configured to execute an application for performing a recommended route provision method,
wherein the recommended route provision method comprises:
receiving a user input for selecting a product;
acquiring data regarding a location of a user terminal;
acquiring data regarding a location of an electronic shelf label to which the selected product is assigned; and
providing a recommended route related to the location of the electronic shelf label to which the selected product is assigned, based on the data regarding the location of the user terminal and the data regarding the location of the electronic shelf label.

11. The recommended route provision system of claim 10, wherein the recommended route provision method further comprises controlling an operation of an LED included in the electronic shelf label to which the selected product is assigned.

12. The recommended route provision system of claim 10,
wherein the receiving of the user input includes receiving a user input for selecting a plurality of products,
the acquiring of the data regarding the location of the electronic shelf label includes acquiring data regarding locations of the plurality of electronic shelf labels to which the plurality of products are assigned,
the providing the recommended route includes providing the recommended route having any one of the locations of the plurality of electronic shelf labels as a destination point and the remaining locations as transit points.
